# EUROPÄISCHE PATENTSCHRIFT

(11) **EP 3 107 166 B1**
(45) Veröffentlichungstag und Bekanntmachung des Hinweises auf die Patenterteilung: **09.05.2018**
(21) Anmeldenummer: 15001752.3
(22) Anmeldetag: 15.06.2015
(51) Int. Cl.: H02G 3/22, H02G 3/12, E04G 15/06

(54) **DURCHFÜHRUNG ZUM HINDURCHFÜHREN EINER LEITUNG DURCH EIN WAND- ODER BODENELEMENT**
CIRCUIT FEED-THROUGH FOR GUIDING A LINE THROUGH A WALL OR FLOOR ELEMENT
PASSAGE DE CABLE PERMETTANT DE FAIRE PASSER UNE CONDUITE DANS UN ELEMENT DE SOL OU DE PAROI

(43) Veröffentlichungstag der Anmeldung: 21.12.2016
(73) Patentinhaber: Hauff-Technik GmbH & Co. KG, 89568 Hermaringen (DE)
(72) Erfinder: Scheuring, Horst, 89182 Bernstadt (DE)
(74) Vertreter: König Szynka Tilmann von Renesse Patentanwälte Partnerschaft mbB

(56) Entgegenhaltungen:
- EP-A1- 2 728 232
- AU-A4- 2005 100 136
- DE-A1- 2 922 124
- DE-A1-102007 040 213
- DE-U1- 9 418 631
- GB-A- 2 516 508
- US-A1- 2007 177 365

## Beschreibung

Die vorliegende Erfindung betrifft eine Durchführung zum Hindurchführen einer Leitung durch ein Bodenelement.

Mit einer in Rede stehenden Durchführung kann eine Leitung, etwa eine Gas-, Wasser-, Elektro- oder Datenleitung, durch bspw. eine betonierte Bodenplatte in ein Gebäude geführt werden. Die in diesem Fall als Bodendurchführung ausgelegte Durchführung wird dann beim Betonieren der Bodenplatte mitvergossen, und im Anschluss kann bzw. können die Leitung(en) über die Durchführung durch die Bodenplatte gebracht werden. Die Durchführung weist dazu eine Durchführungshülle auf, die in dem Beton eine Öffnung zum Hindurchführen der Leitung freihält.

Aus der EP 2 728 232 A1 ist eine Durchführung zum Einbau in ein Wand- oder Bodenelement bekannt, die ein Rohrelement zum Einbetonieren aufweist. Innenseitig in dieses Rohrelement ist ein Deckel eingesetzt, in dem Rohrelement selbst ist ein Verstärkungselement vorgesehen, welches das Rohrelement beim Einbetonieren stabilisiert.

Aus der DE 10 2007 040 213 A1 ist ein Zähler- oder Verteilerkasten bekannt, in den eine Wasserwaage integriert ist. Bei der Montage kann der Zähler- oder Verteilerkasten selbst als Schablone genutzt werden.

Der vorliegenden Erfindung liegt das technische Problem zugrunde, eine gegenüber dem Stand der Technik vorteilhafte Durchführung anzugeben.

Erfindungsgemäß löst diese Aufgabe eine Durchführung gemäß Anspruch 1.

Bevorzugte Ausgestaltungen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Bei der Durchführung handelt es sich um eine Bodendurchführung, wobei die Durchführungshülle (auch "Kasten") dann zum Einbetoniertwerden in die Bodenplatte und dabei Freihalten einer Öffnung in der Bodenplatte zum Hindurchführen der Leitung ausgelegt ist.

Die Erfindung betrifft dann auch ein Verfahren zur Montage dieser Bodendurchführung, bei welchem die Bodendurchführung durch Einbringen eines Erdspießes in das Erdreich platziert wird und
1.) Schüttgut um die Bodendurchführung aufgeschüttet wird;
2.) die Ausrichtung der Bodendurchführung mithilfe der Libelle überprüft wird;
3.) das Schüttgut um die Bodendurchführung verfestigt wird;
4.) die Bodenplatte gegossen und die Bodendurchführung dabei einbetoniert wird;
wobei die Schritte 2.) und 3.) in dieser Reihenfolge mehrfach wiederholt werden bevor Schritt 4.) durchgeführt wird.

Die Erfinder haben festgestellt, dass die Befestigung der Libelle an der Durchführungshülle auf einen Monteur, der die Bodendurchführung vor dem Betonieren der Bodenplatte platziert und ausrichtet, einen motivierenden Einfluss dahingehend hat, eine möglichst lotrechte Ausrichtung der Durchführungshülle zu erreichen. Bei entsprechenden Versuchen wurde beobachtet, dass mit der Libelle als ständigem Anzeiger vor Augen ein Anreiz zur Optimierung geschaffen wird. In der Verhaltenspsychologie wird ein solches "in die richtige Richtung stupsen" auch als *Nudging* bezeichnet.

Der Monteur wird so insbesondere zur Durchführung des genannten Verfahrens motiviert, also zum mehrfach wiederholten Überprüfen der Ausrichtung der Bodendurchführung und Verfestigen des Schüttguts um die Bodendurchführung, in der Regel durch Festtreten mit den Füßen. Er bringt die Bodendurchführung so sukzessive in eine hinsichtlich der lotrechten Ausrichtung und auch hinsichtlich der Standfestigkeit (wegen des wiederholten Verfestigens) optimierte Position. Es wird Schüttgut um die Bodendurchführung aufgeschüttet, das dann sukzessive verfestigt wird, wobei mit der Verfestigung auch eine Ausrichtung einhergeht (siehe unten im Detail).

Die Libelle bietet zwar nicht notwendigerweise im Einzelnen dieselbe Präzision wie eine angelegte Wasserwaage. In der Praxis hat die Durchführungshülle einer Bodendurchführung nämlich eine große und plane Oberseite, auf die sich eine Wasserwaage zuverlässig auflegen lässt; demgegenüber ist eine Kontakt- bzw. Verbindungsfläche zwischen der Durchführungshülle und der daran befestigten Libelle eher klein (kann also auch eine kleine Verkippung im Rahmen einer Ungenauigkeit bei der Befestigung der Libelle einen größeren Einfluss haben). Trotz einer theoretisch also eventuell sogar geringeren Genauigkeit als bei einer Wasserwaage haben die Erfinder aufgrund der motivierenden Wirkung eine gewissermaßen "im Mittel" bessere Ausrichtung mit der befestigten Libelle beobachtet. Wenngleich das Befestigen einer Libelle wegen der Redundanz (der Monteur auf der Baustelle hat ohnehin eine Wasserwaage dabei) und insbesondere auch wegen der Zusatzkosten zunächst nachteilig erscheint, überzeugen die damit erreichten Ergebnisse.

"Durchführungshülle" meint ganz allgemein ein Bauteil, das ein Innenvolumen in Bezug auf die Umlaufrichtung vollständig umlaufend umschließt, etwa über eine in Leitungsrichtung (die bei der Bodendurchführung der Höhenrichtung entspricht) genommene Länge von mindestens 2 cm, 5 cm, 10 cm, 15 cm bzw. 20 cm, wobei mögliche Obergrenzen von der Dicke des Bodenelements abhängen und bspw. bei höchstens 2 m, 1,5 m,1 m bzw. 0,5 m liegen können. Durch das Innenvolumen wird die Leitung hindurchgeführt.

Die "Libelle" ist ein zumindest bereichsweise jedenfalls transluzentes, vorzugsweise transparentes, Behältnis, das einen mit einer Flüssigkeit und einer Gasblase gefüllten Hohlraum definiert. Bei der Flüssigkeit kann es sich beispielsweise um Ethanol oder Diethylether handeln, die Gasblase schwimmt darin aufgrund des Auftriebs auf; die obere Begrenzung des Hohlraums ist gewölbt, und die Gasblase schwimmt dann an der höchsten Stelle auf. Das Behältnis kann beispielsweise aus Glas oder einem Kunststoffmaterial gefasst sein.

Die "Durchführungshülle" ist bevorzugt aus einem Kunststoffmaterial vorgesehen, etwa als Extrusions- oder Spritzgussteil; ersteres kann im Falle der Wanddurchführung bevorzugt sein, letzteres im Falle der Bodendurchführung. Die Durchführungshülle kann mehrteilig aufgebaut oder monolithisch (siehe unten) vorgesehen sein.

Bei einer bevorzugten Ausführungsform ist die Libelle eine Dosenlibelle. Die Gasblase kann sich darin dann also in allen zur Höhenrichtung senkrechten Seitenrichtungen (den horizontalen Richtungen in der Montageposition) bewegen, was dementsprechend eine lotrechte Ausrichtung bezüglich sämtlicher horizontaler Richtungen erlaubt. Die Gasblase ist entlang einer gewölbten Fläche der Dosenlibelle beweglich, die an ihrem höchsten Punkt senkrecht zur Höhenrichtung liegt und von diesem höchsten Punkt nach außen abfällt. Mit einer Dosenlibelle, in der mittig beispielsweise ein Kreis als "Ziel" für die Luftblase definiert ist, haben die Erfinder eine besonders motivierende Wirkung beobachtet, insbesondere bei der Bodendurchführung. Bevorzugt ist eine Dosenlibelle in Form eines flachen Zylinders, die bei der bevorzugten oberseitigen Montage in Höhenrichtung gesehen kreisförmig ist.

Bei einer anderen bevorzugten Ausführungsform ist die Libelle eine Röhrenlibelle, kann sich die Gasblase darin also nur in einer der zur Höhenrichtung senkrechten Richtungen bewegen (jedenfalls bei einer Betrachtung auf der hier relevanten Größenskala); die Gasblase ist an der gewölbten oberen Begrenzung also entlang einer Kurve geführt, die in einer zur Höhenrichtung parallelen Ebene liegt. Bei der Wanddurchführung liegt diese Ebene dann senkrecht zur Leitungsrichtung.

Generell beziehen sich im Rahmen dieser Offenbarung Angaben wie "oben" und "unten" bzw. "seitlich" auf die Orientierung der Durchführung, insbesondere einer Bodendurchführung, in der Montageposition. Bei idealerweise lotrechter Ausrichtung liegt dann eine Höhenrichtung der Durchführung (in welcher die Höhe bestimmt wird und worauf sich oben/unten beziehen) parallel zur vertikalen Richtung und liegt jeweils eine zur Höhenrichtung senkrechte Seitenrichtung parallel zu einer der horizontalen Richtungen. Eine Umlaufrichtung bezieht sich bei der Bodendurchführung auf einen Umlauf um eine zur Höhenrichtung/vertikalen Richtung parallele Achse. Die "lotrechte" Ausrichtung der Bodendurchführung meint eine Annäherung der Höhenrichtung an die vertikale Richtung.

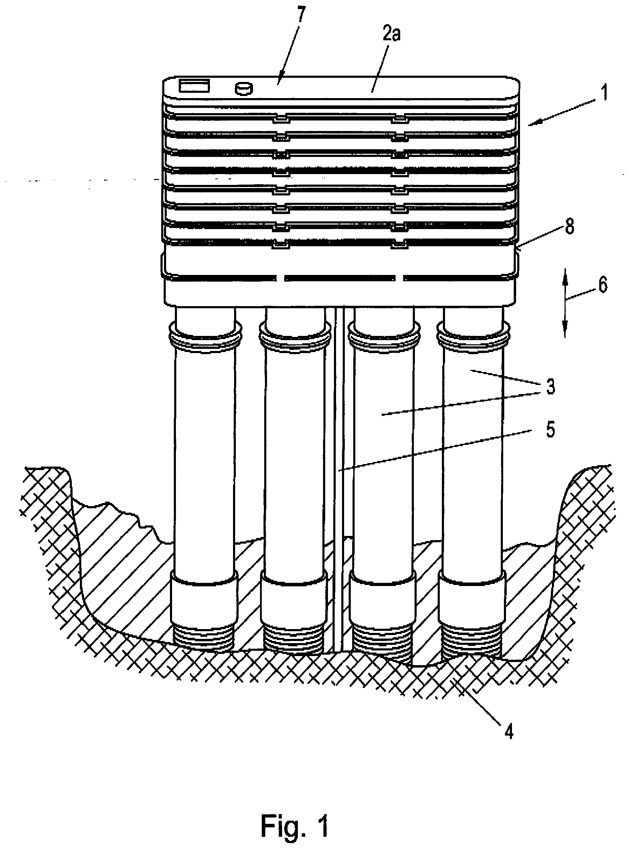

Die Durchführungshülle der Bodendurchführung kann in Höhenrichtung gesehen, von oben darauf blickend eine runde, insbesondere kreisrunde, oder auch eine eckige Form haben, auch eine eckige Form mit abgerundeten Kanten ist möglich, vgl. Fig. 1 zur Illustration. Zur einfacheren begrifflichen Unterscheidung wird die Durchführungshülle der Bodendurchführung im Folgenden auch als "Kasten" bezeichnet, was aber insoweit keine weitergehende Implikation hinsichtlich der Form (rund/eckig) haben soll.

Bei der Bodendurchführung grenzt im einbetonierten Zustand der "Kasten" mit zumindest einem Bereich einer seitlichen, umlaufenden Außenwandfläche an den Beton und hält so die Öffnung darin frei. Üblicherweise ragt der Kasten dabei nach oben ein Stück weit aus der fertig gegossenen Bodenplatte heraus, siehe unten im Detail. Zum Hindurchführen der Leitung mündet zumindest ein Schutzrohr von unten in den Kasten, das im Allgemeinen auch direkt angeformt, also monolithisch damit ausgebildet sein kann. Bevorzugt ist der Kasten zum Ansetzen eines Schutzrohres ausgelegt, kann dieses also entweder auf einen bodenseitigen Stutzen aufgesteckt oder vorzugsweise in eine bodenseitige Öffnung eingeschoben werden und ist dabei bevorzugt gegen den Kasten gedichtet. Bevorzugt werden an den Kasten eine Mehrzahl Schutzrohre angesetzt (ist dieser entsprechend ausgebildet), etwa mindestens zwei, vorzugsweise mindestens drei, und (davon unabhängig) beispielsweise nicht mehr als fünf Schutzrohre.

Wenngleich im Allgemeinen auch eine komplexere Ausgestaltung mit beispielsweise einem doppelwandigen Kasten denkbar ist, begrenzt bevorzugt eine der vorstehend genannten Außenwandfläche entgegengesetzte Innenwandfläche (der Kastenwand) die vom Kasten freigehaltene Öffnung, in welche das mindestens eine Schutzrohr mündet. Das Schutzrohrinnere und die Öffnung sind zumindest beim Hindurchführen der Leitung druckfluidisch verbunden, davor/danach ist auch ein Verschließen des Schutzrohres denkbar, wenngleich nicht bevorzugt. Der Kasten muss sich nach unten, zum Erdreich hin nicht notwendigerweise durch die gesamte Bodenplatte hindurch erstrecken, sondern kann eine Durchgangsöffnung darin für die Leitung auch gemeinsam mit dem Schutzrohr freihalten (die Öffnung ist dann ein vertikaler Teilabschnitt der Durchgangsöffnung).

Die an der Durchführungshülle "zumindest mittelbar befestigte" Libelle ist derart form-, kraft- und/oder stoffschlüssig damit oder mit einem seinerseits mit der Durchführungshülle entsprechend verbundenen Teil (z. B. dem Montageflansch bei einer Wanddurchführung, siehe vorne) verbunden, dass die Libelle und die Durchführungshülle in ihrer Relativposition festgelegt und nicht ohne Kraftaufwand voneinander trennbar sind, vorzugsweise nicht zerstörungsfrei voneinander trennbar sind (ohne Zerstörung der Durchführungshülle, der Libelle und/oder eines Teils dazwischen, insbesondere eines Verbindungsmittels, insbesondere einer Verbindungsschicht, siehe unten). Insbesondere im Falle einer Bodendurchführung ist bevorzugt, dass die Libelle direkt an der Durchführungshülle befestigt ist. Im Allgemeinen können die Libelle und die Durchführungshülle (bzw. ein mit dieser verbundenes Teil) auch zusammengesteckt sein, kann die Libelle also beispielsweise in einer Ausnehmung (siehe unten im Detail) verspreizt und so darin gehalten sein; auch ein Verrasten ist denkbar, sodass also ein Formschluss (eine Hinterschneidung) die Libelle an der Durchführungshülle hält.

Bei einer bevorzugten Ausführungsform ist die Libelle mit einer stoffschlüssigen Verbindung befestigt, wobei im Allgemeinen auch eine Kombination mit einem Kraft-/Formschluss denkbar ist, eine ausschließlich stoffschlüssige Verbindung jedoch bevorzugt ist. Bevorzugt ist eine Klebeverbindung, die im Allgemeinen beispielsweise auch mit einem (doppelseitigen) Klebeband hergestellt sein kann, bevorzugt jedoch von einer Schicht eines zuvor amorphen Klebstoffs gebildet wird. Im Falle der Bodendurchführung ist die Libelle bevorzugt direkt mit dem Kasten stoffschlüssig verbunden. Der Klebstoff wird dann bevorzugt auf die Libelle aufgebracht, und es wird diese an den Kasten gesetzt. Wie bereits erwähnt, ist die Durchführung in bevorzugter Ausgestaltung eine Bodendurchführung und wird die Durchführungshülle dann auch als Kasten bezeichnet.

In bevorzugter Ausgestaltung weist der Kasten oberseitig einen entfernbaren Deckel auf, der also Teil des Kastens ist und den übrigen Kasten nach oben hin verschließt, vorzugsweise vollständig. Die Libelle ist bevorzugt an dem Deckel befestigt. Im Allgemeinen kann der Deckel auch monolithisch mit dem übrigen Kasten ausgebildet sein, bevorzugt ist er an den übrigen Kasten angesetzt (eingesetzt oder aufgesetzt). Generell meint "monolithisch" ein in seinem Materialvolumen von Materialgrenzen zwischen unterschiedlichen Materialien bzw. Materialien unterschiedlicher Herstellungsgeschichte freies Teil, jedenfalls von darin statistisch verteilten Einschlüssen (wie beispielsweise Farbpigmenten) abgesehen. Ein monolithisches Teil ist bevorzugt als Spritzgussteil ausgeführt.

Bei einer bevorzugten Ausführungsform ist die Libelle in einer Ausnehmung in einer Außenwandfläche des Kastens gegenüber der übrigen Außenwandfläche (zumindest in direkter Nachbarschaft) zurückversetzt angeordnet, vorzugsweise in einer oberseitigen Außenwandfläche. Dabei soll zumindest eine dem Kasten zugewandte Seite der Libelle gegenüber der übrigen Außenwandfläche zurückversetzt sein, sodass die Ausnehmung beispielsweise eine Montageposition für die Libelle definiert. Bevorzugt kann die Libelle derart zurückversetzt sein, dass eine dem Kasten abgewandte Seite der Libelle gegenüber der übrigen Außenwandfläche nicht übersteht, vorzugsweise bündig damit liegt, was einer Beschädigung vorbeugen helfen kann.

Bei einer bevorzugten Ausführungsform, welche die Variante mit Röhrenlibelle betrifft (siehe vorne), ist zusätzlich zu der ersten Röhrenlibelle eine weitere, ebenfalls an dem Kasten befestigte Röhrenlibelle vorgesehen, und es wird insoweit auch auf die vorstehenden Definitionen verwiesen. Die beiden Röhrenlibellen sind kreuzförmig zueinander angeordnet, also in Umlaufrichtung um im Rahmen des technisch Möglichen bevorzugt 90° versetzt. Die jeweilige Ebene, in der die Kurve, entlang welcher die Gasblase beweglich ist, je Röhrenlibelle liegt, soll also bevorzugt senkrecht auf der jeweilig anderen Ebene (die durch die jeweilig andere Röhrenlibelle bestimmt ist) stehen.

Bei einer bevorzugten Ausführungsform ist der Kasten zum Entfernen eines oberen Kastenteils zur Anpassung einer Kastenhöhe an einen Bodenaufbau auf der Bodenplatte ausgelegt. Der Kasten wird mit einem unteren Teil einbetoniert und steht dann über den fertigen Bodenaufbau nach oben über, weil ein gewisser Überschuss angesichts in Zahl und Stärke variierender Bodenaufbauschichten (Estrich etc.) notwendig sein kann. Zum Ausgleich ist das obere Kastenteil abnehmbar. Dazu kann der Kasten beispielsweise mehrteilig aus einer Mehrzahl aufeinandergesetzter, jeweils umlaufender Kastenteile aufgebaut sein. Die aufeinandergesetzten Kastenteile liegen dann dicht aneinander an, sodass also insbesondere kein Beton eindringen kann. Die Kastenteile können beispielsweise mit einer sich in Höhenrichtung erstreckenden Schraube in ihrer Relativposition fixiert sein oder bevorzugt von einer zum Entfernen lösbaren Clipseinrichtung zusammengehalten werden.

In einer einfachen und bevorzugten Ausgestaltung ist die Klipseinrichtung im Wesentlichen oder ausschließlich aus einem Vorsprung an einem Kastenteil und einem dazu passenden Aufnahmeloch oder einer Ausnehmung (das heißt einem nicht durchgehenden Loch) an dem anderen Kastenteil aufgebaut. Damit kann der Vorsprung beim Einklipsen in das Loch oder die Ausnehmung eingreifen. Dieser Vorgang kann, z.B. durch Anschrägen des Vorsprungs oder eine Schräge vor dem Loch oder der Ausnehmung, allein durch die Zusammensetzbewegung beim Zusammenführen der Kastenteile erfolgen.

Wenn bei der bevorzugten Ausgestaltung eine Klipseinrichtung aus einem Vorsprung und einer zugehörigen Ausnehmung oder einem Loch besteht, dann sind vorzugsweise mehrere solcher Klipseinrichtungen pro Kastenteilverbindung vorgesehen, und zwar um den Umfang in der Horizontalen (bezogen auf die Einbauposition, also mit ungefähr vertikal stehenden Leitungen) verteilt. Zum Beispiel können zwischen zwei und zehn Klipseinrichtungen vorgesehen sein, und zwar abhängig davon, wie groß der Kasten insgesamt ist. Die Größe des Kastens hängt z.B. damit zusammen, wie viele Leitungen durch die Durchführung durchgeführt werden und wie groß diese Leitungen sind.

Der Kasten ist im Übrigen in eine zur Anpassung seiner Höhe geeignete Zahl von Kastenteilen mit geeigneten Zwischenabständen aufgeteilt. Dabei sind zwischen sechs und dreizehn Kastenteile (und dementsprechend zwischen fünf und zwölf Verbindungen zwischen Kastenteilen) und typischerweise Höhen pro Kastenteil (also bezogen auf den zusammengebauten Zustand) zwischen 15 und 30 mm bevorzugt.

Der Kasten kann bevorzugt auch mit einer umlaufenden Sollbruchstelle versehen sein, entlang welcher der zu entfernende Kastenteil durch Krafteinwirkung und ohne spanende oder schneidende Bearbeitung abgetrennt werden kann. Vor dem Abtrennen ist der Kasten über die Sollbruchstelle hinweg monolithisch. Der Begriff der Sollbruchlinie soll also alle in irgendeiner Form durch reine Krafteinwirkung trennbaren Schwachstellen umfassen, die in solcher Weise im Wesentlichen um den Kasten umlaufen, dass der Kasten entsprechend auftrennbar ist. Dabei sollen aber Trennvorgänge durch eine spanende oder schneidende Bearbeitung ausgeschlossen sein.

Bevorzugt ist eine Sollbruchlinie durch eine lokale Wandstärken-Verringerung realisiert. In der Praxis haben sich fünf bis zwölf Sollbruchlinien in jeweils unterschiedlicher Höhe bewährt, wobei zwischen den Sollbruchlinien ein vertikaler Abstand in der Größenordnung zwischen 8 mm und 30 mm sinnvoll sein kann. Bevorzugte Untergrenzen liegen bei 10 mm und 12 mm und bevorzugte Obergrenzen liegen bei 25 mm, 20 mm und 18 mm.

Bevorzugt verfügt der Kasten über seitlich auskragende Verstärkungsrippen, die vorzugsweise jeweils vollständig umlaufen. Diese Verstärkungsrippen können beispielsweise der Verankerung in der Bodenplatte bzw. im Bodenaufbau und/oder insbesondere im Falle eines Kastens mit entfernbarem/entfernbaren Kastenteil(en) einer Verbesserung der Stabilität des Kastens dienen, insbesondere des jeweiligen Abschnitts beim Abtrennen.

Bei einer bevorzugten Ausführungsform ist an dem Kasten ein Erdspieß vorgesehen, der zum Platzieren der Durchführung in Erdreich eingebracht werden kann. Dazu kann das dem Kasten entgegengesetzte Ende des Erdspießes bevorzugt spitz zulaufen. Auch aufgrund der mechanischen Stabilität beim Einbringen ins Erdreich ist ein Erdspieß aus Metall bevorzugt.

In bevorzugter Ausgestaltung ist die Durchführung derart vorgesehen, dass ein dem Kasten abgewandtes Ende des Erdspießes zur Höhenanpassung relativ zu dem Kasten verschiebbar gelagert ist und in unterschiedlichen Relativpositionen arretierbar ist. Einerseits kann der Erdspieß im Gesamten an dem Kasten in Höhenrichtung verschiebbar geführt sein und dann beispielsweise durch Anziehen einer Schraube in einer Relativposition dazu arretiert werden. Andererseits und bevorzugt kann auch ein mehrteiliger Erdspieß vorgesehen sein, wobei dann ein dem Kasten distales Erdspießteil (mit dem dem Kasten abgewandten Ende) an einem dem Kasten proximalen Erdspießteil geführt ist. Das dem Kasten proximale Erdspießteil ist bevorzugt in seiner Relativposition zum Kasten festgelegt, also daran befestigt, und es wird dann nach einer Höhenanpassung auch die Relativposition der beiden Erdspießteile zueinander festgelegt, bevorzugt durch Anziehen einer Schraube.

Wie bereits eingangs erwähnt, betrifft die Erfindung auch ein Montageverfahren, wobei vor dem Gießen der Bodenplatte mehrfach wiederholt die Ausrichtung der Durchführung mithilfe der Libelle überprüft und das Schüttgut um die Durchführung verfestigt wird. "Mehrfach" kann insoweit beispielsweise mindestens 3-mal, vorzugsweise mindestens 6-mal, weiter bevorzugt mindestens 8-mal und besonders bevorzugt mindestens 10-mal, meinen (theoretische Obergrenzen liegen beispielsweise bei 1.000-, 500- bzw. 100-mal). Aufgrund der motivierenden Wirkung wiederholt der Monteur den Vorgang entsprechend oft und nähert sich sukzessive einer möglichst lotrechten Ausrichtung an.

In bevorzugter Ausgestaltung wird auch wiederholt Schüttgut aufgeschüttet, es wird dann also aufgeschüttet, die Ausrichtung überprüft und verfestigt, um dann diese Verfahrensschritte mehrfach wiederholt erneut zu durchlaufen (vgl. die Definition von mehrfach im vorstehenden Absatz dazu). So können zugleich eine lotrechte Ausrichtung und ein guter Halt der Durchführung vor/bei dem Vergießen erreicht werden.

In bevorzugter Ausgestaltung werden bei der Montage einer Durchführung mit einem höhenverstellbaren Erdspieß der Kasten und das dem Kasten abgewandte Ende des Erdspießes nach dem Platzieren der Durchführung in oben beschriebener Weise relativ verschoben und dann in einer Relativposition arretiert.

In bevorzugter Ausgestaltung wird bei der Montage einer Durchführung mit einem zum Entfernen eines oberen Kastenteils ausgelegten Kasten (siehe vorne im Detail) das obere Kastenteil nach dem Gießen der Bodenplatte entfernt.

Die Erfindung betrifft auch die Verwendung einer vorliegend offenbarten Durchführung zum Verbauen mit einem / Integrieren in ein Bodenelement, insbesondere durch Einbetonieren in eine Bodenplatte, und/oder zum Hindurchführen einer Leitung. Generell handelt es sich bei der Leitung bevorzugt um eine Gas-, Wasser-, Elektro- oder Datenleitung (oder um ein Leerrohr für eine dieser Leitungen) und werden weiter bevorzugt durch die Durchführung mehrere solcher Leitungen (unterschiedlichen Typs) kombiniert geführt. Im Falle der Wanddurchführung können auch eine Mehrzahl Durchführungshüllen in die Durchgangsöffnung gesetzt werden und kann durch die Durchführungshüllen dann jeweils mindestens eine Leitung (bevorzugt genau eine Leitung) geführt werden. Die Durchführungshüllen können bspw. an einem gemeinsamen Verbindungsflansch befestigt sein.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt:
- Fig. 1: eine erfindungsgemäße Durchführung, und zwar eine Bodendurchführung, während der Montage in einer Schrägansicht;
- Fig. 2: eine Aufsicht auf die Durchführung gemäß Fig. 1 mit einer daran befestigten Dosenlibelle;
- Fig. 3: eine Fig. 2 vergleichbare Ansicht einer weiteren erfindungsgemäßen Durchführung (Bodendurchführung) mit zwei kreuzförmig angeordneten Röhrenlibellen.

Fig. 1 zeigt eine Durchführung 1 mit einem Kasten 2, in den von unten vier Schutzrohre 3 eingeschoben sind. Die Schutzrohre 3 verlaufen in einem Graben zur Durchführung 1 hin im Wesentlichen horizontal, erstrecken sich dann gekrümmt und münden vertikal in den Kasten 2 (letzteres ist in der Darstellung sichtbar). Nach dem Gießen der Bodenplatte und damit Einbetonieren der Durchführung 1 können durch die Schutzrohre 3 Leitungen geführt und so ins Innere des dann auf der Bodenplatte errichteten Gebäudes gebracht werden.

Fig. 1 zeigt eine Montagesituation, in welcher der Graben, in dem sich die Schutzrohre 3 horizontal erstrecken, bereits teilweise mit Schüttgut 4 aufgefüllt ist. Vor dem Aufschütten des Schüttguts 4 wird zum Platzieren der Durchführung 1 ein an dem Kasten 2 befestigter Erdspieß 5 aus Metall ins Erdreich eingebracht und wird durch Relativverschieben von zwei aneinander geführten Erdspießteilen (nicht im Einzelnen gezeigt, verdeckt durch das Schüttgut 4) der Kasten in Bezug auf die vertikale Richtung 6 auf die gewünschte Höhe gebracht.

An seiner Oberseite ist der Kasten 2 mit einem Deckel 2a verschlossen, der den übrigen Kasten 2b nach oben hin abdeckt. Auf dem Deckel 2a ist eine Dosenlibelle 7 aufgeklebt, die als Anzeige einer lotrechten Ausrichtung des Kastens 2 dient. Die Erfinder haben beobachtet, dass die an dem Kasten 2 befestigte Libelle 7 einen Monteur dahingehend motiviert, eine lotrechte Ausrichtung des Kastens 2 wiederholt zu prüfen und zu optimieren.

Das Optimieren der Ausrichtung erfolgt dabei durch ein gezieltes Verfestigen des Schüttguts 4 auf der einen oder eben der anderen Seite der Durchführung 1, wobei das Verfestigen auf einer Seite die Durchführung zur anderen Seite hin drückt, und umgekehrt. Es wird dann wiederholt zur Ausrichtung verfestigt, die Ausrichtung mittels der Dosenlibelle 7 überprüft und anschließend wieder verfestigt, womit eine sukzessive Annäherung an eine perfekt lotrechte Ausrichtung erreicht wird. Dabei wird auch immer wieder etwas Schüttgut 4 zusätzlich aufgeschüttet (und in Verbindung mit einer Überprüfung der Ausrichtung wiederholt verdichtet), bis der Graben aufgefüllt ist.

Beim Gießen der Bodenplatte legt sich der Beton dann an die noch aus dem Schüttgut 4 nach oben überstehenden Teilabschnitte der Schutzrohre 3 und bis zur gegossenen Höhe an eine seitliche Außenwandfläche 8 des Kastens 2 an.

Da der weitere Bodenaufbau (Estrich etc.) dann im Einzelnen auch variieren kann, ragt der Kasten 2 mit einem gewissen Überschuss aus der fertig gegossenen Bodenplatte heraus. Zur Anpassung an den dann fertigen Bodenaufbau (auf der Bodenplatte) gliedert sich der Kasten in mehrere, in der vertikalen Richtung 6 aufeinanderfolgende Kastenteile, wobei dann ein oberes Kastenteil / obere Kastenteile zur entsprechenden Anpassung abgenommen werden können. Die Kastenteile sind entweder mehrteilig zueinander, bevorzugt miteinander verclipst, oder auch monolithisch miteinander durch Sollbruchstellen separiert.

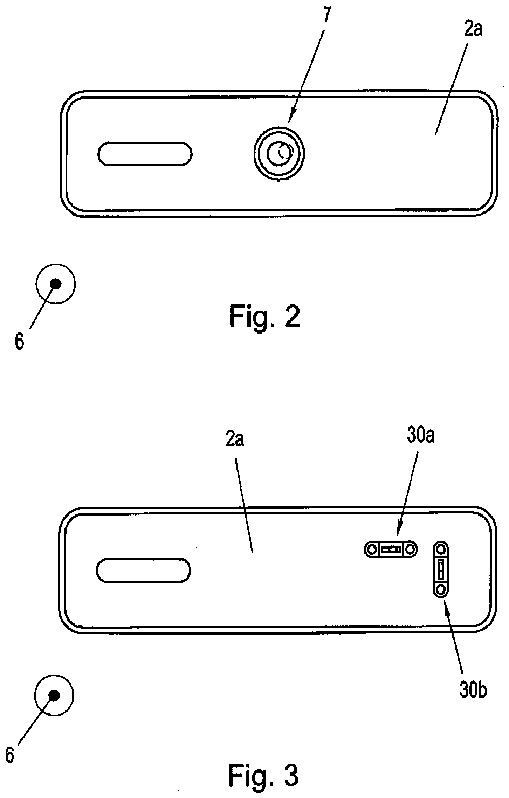

Fig. 2 zeigt die Dosenlibelle 7 der Durchführung 1 gemäß Fig. 1 in einer Aufsicht. Es handelt sich dabei um ein zylinderförmiges Behältnis aus einem transparenten Kunststoffmaterial, welches in seinem Inneren einen flüssigkeitsgefüllten Hohlraum mit einer Gasblase darin begrenzt. Eine kreisförmige Markierung markiert die Mitte der gewölbten Innenoberfläche des Behältnisses, also die höchste Stelle bei lotrechter Ausrichtung. So wird ein Anreiz geschaffen, die Ausrichtung der Durchführung 1 sukzessive zu optimieren, um die Gasblase in die ringförmige Markierung zu bringen.

Fig. 3 zeigt eine jener gemäß Fig. 2 vergleichbare Aufsicht einer anderen Durchführung. Diese ist von der Dosenlibelle 7 abgesehen zu der anhand Fig. 1 erläuterten Durchführung 1 baugleich, es wird insoweit auf die vorstehende Offenbarung verwiesen. Anstelle der Dosenlibelle sind zwei Röhrenlibellen 30a,b auf den Deckel 2a aufgeklebt. Jede der Röhrenlibellen 30a,b kann die lotrechte Ausrichtung in Bezug auf eine der (zur vertikalen Richtung 6 senkrechten) horizontalen Richtungen anzeigen. Durch die kreuzförmige Anordnung der Röhrenlibellen 30a,b kann zuverlässig eine im Gesamten lotrechte Ausrichtung der Durchführung 1 erreicht werden.

Alternativ zu der in den Figuren gezeigten Anordnung mit den auf eine plane oberseitige Außenwandfläche aufgesetzten Libellen 7, 30 können die Libellen 7, 30 bei einer bevorzugten Ausführungsform auch gegenüber der übrigen Außenwand zurückversetzt angeordnet sein (nicht dargestellt).

Bei einer nicht in den Figuren gezeigten Ausführungsform ist die Durchführung eine Wanddurchführung und wird ihre Durchführungshülle in ein Futterrohr gesetzt, das in eine Gebäudewand einbetoniert ist und eine Durchgangsöffnung zwischen den Seitenflächen der Wand freihält Später kann dann eine Leitung durch die Durchführungshülle in das Gebäude geführt werden. Nach dem Einsetzen wird die Durchführungshülle in der Durchgangsöffnung befestigt, und zwar durch Verspannen eines Elastomerkörpers.

An der Durchführungshülle ist ein Montageflansch befestigt, der nach dem Einsetzen der Durchführungshülle an einer der Seitenflächen der Wand anliegt. An diesem Montageflansch ist eine Röhrenlibelle befestigt, welche die sachgemäße Ausrichtung der Durchführungshülse in Bezug auf ein Verdrehen in der (kreisrunden) Durchgangsöffnung in Umlaufrichtung anzeigt. Ein Monteur wird so auch ohne eine Montageanweisung oder dergleichen dazu motiviert, die richtige Position für die Durchführungshülle einzustellen. Bei einer anschließend hindurchgeführten Gasleitung ist so einem speziellen Leitungsstück mit Gashahn die geeignete Orientierung vorgegeben (siehe vorne im Detail).

## Patentansprüche

1. Durchführung (1), die als Bodendurchführung zum Hindurchführen zumindest einer Leitung durch ein Bodenelement vorgesehen ist, mit einer Durchführungshülle (2), die zum Verbautwerden mit dem Bodenelement und zum Hindurchführen der Leitung durch das Bodenelement ausgelegt ist,
wobei das Bodenelement eine Bodenplatte ist und die Durchführungshülle (2) als Kasten zum Einbetoniertwerden in die Bodenplatte und dabei Freihalten einer Öffnung in der Bodenplatte zum Hindurchführen der Leitung durch die Bodenplatte ausgelegt ist,
**dadurch gekennzeichnet, dass** die Durchführung (1) an dem Kasten (2) einen Erdspieß (5) aufweist, zum Einbringen in Erdreich und damit Platzieren der Durchführung (1) bei der Montage, und
dass an dem Kasten (2) eine Libelle (7, 30) zur Überprüfung einer lotrechten Ausrichtung der Durchführungshülle (2) zumindest mittelbar befestigt ist.

2. Durchführung (1) nach Anspruch 1, bei welcher die Libelle (7, 30) eine Dosenlibelle (7) ist.

3. Durchführung (1) nach Anspruch 1, bei welcher die Libelle (7, 30) eine Röhrenlibelle (30) ist.

4. Durchführung (1) nach einem der vorstehenden Ansprüche, bei welcher die Libelle (7, 30) mit einer stoffschlüssigen Verbindung befestigt ist, vorzugsweise mittels Klebstoff.

5. Durchführung (1) nach einem der vorstehenden Ansprüche, bei welcher der Kasten (2) einen entfernbaren oberseitigen Deckel (2a) aufweist, an welchem die Libelle (7, 30) befestigt ist.

6. Durchführung (1) nach einem der vorstehenden Ansprüche, bei welcher die Libelle (7, 30) in einer Ausnehmung in einer Außenwandfläche des Kastens (2) gegenüber der übrigen Außenwandfläche zurückversetzt angeordnet ist.

7. Durchführung (1) nach Anspruch 3, optional in Verbindung mit Anspruch 5 oder 6, mit einer weiteren Röhrenlibelle (30), die an dem Kasten (2) befestigt ist, wobei die Röhrenlibellen (30a, b) kreuzförmig zueinander angeordnet sind.

8. Durchführung (1) nach einem der vorstehenden Ansprüche, bei welcher der Kasten (2) zum Entfernen eines oberen Kastenteils zur Anpassung einer Kastenhöhe an einen Bodenaufbau der Bodenplatte ausgelegt ist.

9. Durchführung (1) nach einem der vorstehenden Ansprüche, wobei ein dem Kasten (2) abgewandtes Ende des Erdspießes (5) zur Höhenanpassung relativ zu dem Kasten (2) verschiebbar und in unterschiedlichen Relativpositionen arretierbar ist.

10. Verfahren zur Montage einer Durchführung (1) nach einem der vorstehenden Ansprüche, bei welchem die Durchführung (1) durch Einbringen des Erdspießes (5) in das Erdreich platziert wird und
1.) Schüttgut um die Durchführung (1) aufgeschüttet wird;
2.) die Ausrichtung der Durchführung (1) mithilfe der Libelle (7, 30) überprüft wird;
3.) das Schüttgut um die Durchführung (1) verfestigt wird;
4.) die Bodenplatte gegossen und die Durchführung (1) dabei einbetoniert wird;
wobei die Schritte 2.) und 3.) in dieser Reihenfolge mehrfach wiederholt werden bevor Schritt 4.) durchgeführt wird.

11. Verfahren nach Anspruch 10, bei welchem die Schritte 1.), 2.) und 3.) in dieser Reihenfolge mehrfach wiederholt werden bevor Schritt 4.) durchgeführt wird.

12. Verfahren nach Anspruch 10 oder 11, bei welcher ein dem Kasten (2) abgewandtes Ende des Erdspießes (5) zur Höhenanpassung relativ zu dem Kasten (2) verschiebbar und in unterschiedlichen Relativpositionen arretierbar ist, wobei nach dem Platzieren der Durchführung (1) durch das Einbringen des Erdspießes (5) in das Erdreich das dem Kasten (2) abgewandte Ende des Erdspießes (5) und der Kasten (2) zur Höhenanpassung relativ zueinander verschoben werden und in einer der Relativpositionen arretiert werden.

13. Verfahren nach einem der Ansprüche 10 bis 12 zur Montage einer Durchführung (1) nach Anspruch 8, wobei das obere Kastenteil nach dem Gießen der Bodenplatte entfernt wird.

14. Verwendung einer Durchführung (1) nach einem der Ansprüche 1 bis 9 zum Verbauen mit einem Bodenelement, insbesondere zum Einbetonieren in eine Bodenplatte, und/oder zum Hindurchführen einer Leitung.

## Claims

1. A duct (1) which is provided as a floor duct for leading through at least one line through a floor element, comprising
a duct sleeve (2) which is provided for being structurally integrated into said floor element and for leading through said line through said floor element, wherein said floor element is a floor plate and said duct sleeve (2) is provided as a box for being embedded in concrete into said floor plate and keeping free an opening in said floor plate for leading through said line through said floor plate,
**characterized in that** said duct (1) comprises an earth rod (5) at said box (2), for an insertion into the soil and putting said duct (1) in place during the mounting, and
that a bubble level (7, 30) for checking a vertical orientation of said duct sleeve (2) is at least indirectly mounted at said box (2).

2. The duct (1) according to claim 1, wherein said bubble level (7, 30) is a box level (30).

3. The duct (1) according to claim 1, wherein said bubble level (7, 30) is a tube type level (30).

4. The duct (1) according to one of the preceding claims, wherein said bubble level (7, 30) is mounted by a bond connection, preferably by an adhesive.

5. The duct (1) according to one of the preceding claims, wherein said box (2) comprises a removable upper cover (2a) at which said bubble level (7, 30) is mounted.

6. The duct (1) according to one of the preceding claims, wherein said bubble level (7, 30) is arranged in a recess in an outer wall area of said box (2), recessed with respect to the remaining outer wall area.

7. The duct (1) according to claim 3, optionally also in combination with claim 5 or 6, having a further tube type level (30) mounted at said box (2), wherein said tube type levels (30a, b) are arranged crosslike with respect to each other.

8. The duct (1) according to one of the preceding claims, wherein said box (2) is adapted for a removal of an upper box part, for adapting a height of the box to a floor construction of said floor plate.

9. The duct (1) according to one of the preceding claims, wherein an end of said earth rod (5), which faces away from said box (2), is displaceable with respect to said box (2) for a height adaption and is lockable in different relative positions.

10. A method of mounting a duct (1) according to one of the preceding claims, wherein said duct (1) is put in place by inserting said earth rod (5) in said soil and
1.) a space around said duct (1) is filled up by bulk material;
2.) the orientation of the duct (1) is checked by means of said bubble level (7, 30);
3.) said bulk material placed around said duct (1) is grouted;
4.) said floor plate is casted, said duct (1) being embedded in concrete therein;
wherein the steps 2.) and 3.) are repeated several times in this order, before step 4.) is carried out.

11. The method according to claim 10, wherein the steps 1.), 2.) and 3.) are repeated several times in this order, before step 4.) is carried out.

12. The method according to claim 10 or 11, wherein an an end of said earth rod (5), which faces away from said box (2), is displaceable with respect to said box (2) for a height adaption and is lockable in different relative positions, wherein, after putting said duct (1) in place by inserting said earth rod (5) into said soil, said end of said earth rod (5), which faces away from said box (2), and said box (2) are displaced with respect to each other for a height adaption and are locked in one of said relative positions.

13. The method according to one of claims 10 to 12 for mounting a duct (1) according to claim 8, wherein said upper box part is removed after said casting of said floor plate.

14. A use of a duct (1) according to one of claims 1 to 9 for an integration into a floor element, in particular for embedding in concrete, namely in a floor plate, and/or for leading through a line.

## Revendications

1. Passage de conduite (1), conçu sous la forme d'un passage de sol destiné au passage d'au moins une conduite à travers un élément de sol, comportant
une enveloppe de passage (2) conçue pour être intégrée dans l'élément de sol et pour permettre le passage de la conduite à travers l'élément de sol, ledit élément de sol consistant en une plaque de fondation et l'enveloppe de passage (2) étant conçue sous la forme d'une boîte destinée à être noyée dans le béton de la plaque de fondation en maintenant ainsi une ouverture dans la plaque de fondation pour faire passer la conduite à travers celle-ci;
**caractérisé en ce que** le passage de conduite (1) présente un piquet de terre (5) au niveau de la boîte (2), lequel est destiné à être introduit dans la terre et à ainsi servir à la mise en place du passage de conduite (1) lors de l'installation, et
**en ce qu'**une nivelle (7, 30) est fixée au moins indirectement sur la boîte (2) et permet de vérifier l'aplomb de l'enveloppe de passage (2).

2. Passage de conduite (1) selon la revendication 1, dans lequel la nivelle (7, 30) est une nivelle sphérique (7).

3. Passage de conduite (1) selon la revendication 1, dans lequel la nivelle (7, 30) est une nivelle tubulaire (30).

4. Passage de conduite (1) selon l'une des revendications précédentes, dans lequel la nivelle (7, 30) est fixée au moyen d'un apport de matière, de préférence au moyen de colle.

5. Passage de conduite (1) selon l'une des revendications précédentes, dans lequel la boîte (2) présente un couvercle supérieur (2a) amovible sur lequel est fixée la nivelle (7, 30).

6. Passage de conduite (1) selon l'une des revendications précédentes, dans lequel la nivelle (7, 30) est disposée dans un évidement pratiqué dans une surface de paroi extérieure de la boîte (2), et est donc en retrait par rapport au reste de la surface de paroi extérieure.

7. Passage de conduite (1) selon la revendication 3, éventuellement en lien avec la revendication 5 ou 6, comportant une nivelle tubulaire supplémentaire (30) fixée sur la boîte (2), lesdites nivelles tubulaires (30a, 30b) étant disposées dans des plans sécants.

8. Passage de conduite (1) selon l'une des revendications précédentes, dans lequel la boîte (2) est conçue pour pouvoir retirer une partie supérieure de boîte afin d'adapter la hauteur de la boîte à la structure au sol de la plaque de fondation.

9. Passage de conduite (1) selon l'une des revendications précédentes, dans lequel une extrémité du piquet de terre (5) qui est détournée de la boîte (2) est coulissante par rapport à la boîte (2) pour permettre une adaptation de la hauteur et peut être bloquée en diverses positions relatives.

10. Procédé d'installation d'un passage de conduite (1) selon l'une des revendications précédentes, dans lequel le passage de conduite (1) est mis en place en introduisant le piquet de terre (5) dans la terre, et en
1.) déversant des agrégats autour du passage de conduite (1),
2.) vérifiant l'aplomb du passage de conduite (1) à l'aide de la nivelle (7, 30),
3.) solidifiant les agrégats autour du passage de conduite (1), et en
4.) coulant la plaque de fondation et en y noyant le passage de conduite (1);
les étapes 2.) et 3.) sont reproduites plusieurs fois dans cet ordre avant d'effectuer l'étape 4.).

11. Procédé selon la revendication 10, dans lequel les étapes 1.), 2.) et 3.) sont reproduites plusieurs fois dans cet ordre avant d'effectuer l'étape 4.).

12. Procédé selon la revendication 10 ou 11, dans lequel une extrémité du piquet de terre (5) qui est détournée de la boîte (2) est coulissante par rapport à la boîte (2) pour permettre une adaptation de la hauteur et peut être bloquée en diverses positions relatives, et dans lequel, une fois le passage de conduite (1) mis en place par introduction du piquet de terre (5) dans la terre, l'extrémité du piquet de terre (5) qui est détournée de la boîte (2) ainsi que la boîte (2) subissent un coulissement l'une par rapport à l'autre afin d'adapter la hauteur et sont bloquées dans l'une des positions relatives.

13. Procédé selon l'une des revendications 10 à 12, permettant d'installer un passage de conduite (1) selon la revendication 8, dans lequel la partie supérieure de boîte est retirée après le coulage de la plaque de fondation.

14. Utilisation d'un passage de conduite (1) selon l'une des revendications 1 à 9 destinée à être intégrée dans un élément de sol, notamment à être noyée dans le béton d'une plaque de fondation, et/ou destinée au passage d'une conduite.
